# EUROPÄISCHE PATENTSCHRIFT

(11) **EP 1 528 369 B1**
(45) Veröffentlichungstag und Bekanntmachung des Hinweises auf die Patenterteilung: **12.03.2014**
(21) Anmeldenummer: 04023554.1
(22) Anmeldetag: 02.10.2004
(51) Int. Cl.: G01D 11/02, G01D 5/347

(54) **Optischer Drehwinkelsensor**
Optical rotation angle sensor
Capteur d'angle de rotation optique

(30) Priorität: 27.10.2003 DE 10350211; 28.11.2003 DE 10356328
(43) Veröffentlichungstag der Anmeldung: 04.05.2005
(73) Patentinhaber: SICK STEGMANN GmbH, 78166 Donaueschingen (DE)
(72) Erfinder: Siraky, Josef, 78166 Donaueschingen (DE)
(74) Vertreter: Ludewigt, Christoph

(56) Entgegenhaltungen:
- DE-A- 3 929 629
- DE-A- 10 060 574
- GB-A- 2 294 111
- US-A- 4 207 463
- US-A- 5 394 070
- US-A- 5 569 912
- US-A- 6 127 677

## Beschreibung

Die Erfindung betrifft einen optischen Drehwinkelsensor gemäß dem Oberbegriff des Anspruchs 1.

Solche optische Sensoren arbeiten durchweg nach dem Prinzip einer sich in Messrichtung beweglichen Maßverkörperung, die gegenüber einem relativ dazu statisch befindlichen Abtastsystem liegt. Diese Maßverkörperung wird nun nach verschiedenen Prinzipien mit Hilfe von Licht auf elektrischen Photoempfängern abgebildet.

Ein sehr häufig anzutreffende Prinzip ist das Durchlichtprinzip. Hierbei wird die Maßverkörperung, bestehend entweder aus Glas, lichtdurchlässigem Kunststoff oder aus Metall mit herausgeätzten lichtdurchlässigen Strukturen, von einem möglichst parallelen Licht durchdrungen. Auf der gegenüberliegenden Seite wird das bei Bewegung der Maßverkörperung modulierte Licht über Photoempfänger in elektrische Signale umgewandelt. Dieses Verfahren ist relativ einfach und kostengünstig herzustellen.

Ein weiteres Prinzip ist die optische Abtastung einer Maßverkörperung über die Lichtreflexion derselben. Weniger häufig da relativ aufwändig und mit hohen Anforderungen an die Präzision der Teile ist das Prinzip der interferrometrischen Abtastung einer Maßverkörperung. Dabei wird kohärentes Licht an einem Gitter mit einer Gitterbreite in der Größenordnung der Lichtwellenlänge interferiert und führt auf diese Art zu Löschung und Verstärkung des Lichtes und damit zu einer entsprechenden elektrischen Modulation am optischen Empfänger. Auch dieses Verfahren ist sowohl nach dem Durchlichtprinzip, als auch nach dem Reflexionsprinzip bekannt.

Die Grundprobleme bei allen Prinzipien sind zum einen der Abstand zwischen der sich drehenden Maßverkörperung und dem optischen Empfänger bzw. die für eine gute Modulation zuständige statische Maßverkörperung und zum anderen die möglichst exakte zentrische Positionierung der beiden Maßverkörperungen zueinander.

Im industriellen Gebrauch sind Abstände zwischen 100µm bis 300µm üblich für Durchlichtprinzipien. Diese relativ großen Abstände erlauben aber auch nur solche Strukturen zur Modulation, die in etwa in der gleichen Größenordnung liegen. Bei Drehgebern mit sehr hoher Auflösung, bzw. mit sehr kleiner Teilungsstruktur müssen die Abstände deutlich kleiner gehalten werden, was dann hohe Kosten für die mechanische Lagerung und für die Genauigkeit der Mechanik bedeutet. Das Zentrieren der Maßverkörperungen zueinander wird entweder optisch mittels einer Vergrößerungsoptik oder elektrisch mittels von der Abtastung abgeleiteter optischer Signale vorgenommen. In allen Anwendungen wird die sich drehende Maßverkörperung über eine separate Wellenlagerung geführt, die in bezug auf die statische Maßverkörperung sowohl den Abstand, als auch die Zentrizität gewährleistet. Derartige Drehgeber sind beispielsweise aus der DE 100 60 574 A1 bekannt.

Aus der US 4,207,463 ist ein Kompass bekannt, bei dem in bekannter Weise die Kompassscheibe punktförmig auf einer nadelspitzenartigen Halterung aufliegt, um sich im wesentlichen frei drehen zu können. Die Kompassscheibe bildet gleichzeitig eine Sensorscheibe eines optischen Drehwinkelsensors, so dass über den optischen Sensor der Kompass abgelesen werden kann.

Aus der US 5,569,912 ist eine Vorrichtung zur Messung einer Winkelgeschwindigkeit einer Tonbandspule bekannt. Dabei ist eine erste Maßverkörperung fest mit der sich drehenden Spule verbunden und eine zweite Maßverkörperung fest mit dem Gerät. Die Verdrehung der Maßverörperungen gegeneinander wird optisch erfasst. Die sich drehende Spule mit der ersten Maßverkörperung ist auf einer Welle gehalten, die entweder über Kugellager oder mittels ihrer spitz zulaufenden Enden zentriert ist.

Aus der US 6,127,677 ist ein Drehwinkelsensor bekannt, bei dem die sich drehende Maßverkörperung ebenfalls auf einer über ihre spitzen Enden zentriert gehaltenen Welle befestigt ist.

Ausgehend von der DE 100 60 574 A1 ist es Aufgabe der Erfindung, die Zentrizität der beiden ausgerichteten Maßverkörperungen von der bisher benötigten Wellenlagerung unabhängig zu machen.

Eine weitere Aufgabe ist es, den Abstand zwischen der sich drehenden Maßverkörperung und der statischen Maßverkörperung und/oder dem optisch-/elektrischen Wandler sehr klein, z.B. im Bereich von 10-20µm, zu halten. Sowohl der Abstand als auch die Zentrizität sollen dann auch unter sehr hohen axialen und radialen Beschleunigungen erhalten bleiben.

Diese Aufgabe wird gelöst durch einen Drehwinkelsensor mit den Merkmalen des Anspruchs 1.

Ein optischer Drehwinkelsensor nach der Erfindung weist mindestens eine sich in Messrichtung bewegliche Maßverkörperung mit darauf befindlichen Licht durchlässigen und nicht durchlässigen Bereichen auf, sowie mindestens eine in Messrichtung relativ dazu statisch angeordnete zweite Maßverkörperung und/oder mindestens ein statischer photoelektrischer Wandler. Erfindungsgemäß ist vorgesehen, dass die Maßverkörperungen durch eine zwischen den Maßverkörperungen vorgesehene Führung in Messrichtung zueinander ausgerichtet sind. Auf diese Weise ist eine sehr einfache und kostengünstige Lösung zur Zentrierung geschaffen, wobei die Zentrierung unabhängig von der Wellenlagerung sein kann.

Der wesentliche Inhalt der Erfindung beruht darauf, dass anstatt der bisher sehr aufwändig gestalteten Führungen der beiden Maßverkörperungen zueinander durch die bekannte Wellenlagerung, die Maßverkörperungen jetzt nach der Erfindung selbst die Führung übernehmen. Durch die Führung kann auch eine Abstandserhaltung realisiert sein, indem die Elemente zur Führung nur einen bestimmten minimalen Abstand der Maßverkörperungen zulassen.

In konstruktiv einfacher und entsprechend kostengünstiger Weise besteht die Führung aus wenigstens einem an einer der Maßverkörperungen angeordnetem Führungselement und einer an der anderen Maßverkörperung eingebrachten Führungsvertiefung, in der das Führungselement geführt ist. Das Führungselement ist nur ein einziger zentraler Führungszapfen, der in einer zentralen Führungsvertiefung sitzt und somit die Maßverkörperungen zentriert. Wenn dieser zentrale Führungszapfen, der in einer entsprechenden zentralen Führungsvertiefung auf der anderen Maßverkörperung sitzt, spitz ausgebildet ist, und nur mit seiner Spitze auf dem Grund der Führungsvertiefung aufsitzt, können unvermeidbare Reibungsverluste minimiert sein. Das erlaubt problemlos Drehzahlen, die im Bereich von 10000/min und mehr liegen und die bei heutigen Drehgebern gefordert sind.

Das mit der erfindungsgemäßen Lösung neu entstehende Problem der unvermeidlichen Reibung bei Führungen wird durch ein lichtdurchlässiges Fluid mit adhäsiver Wirkung gelöst, das eine Art Schmierung für die an diesen Stellen entstehende Reibung bei Drehung darstellt. Das viskose Medium hat noch den wesentlichen Vorteil, dass die Maßverkörperungen dadurch auf Abstand gehalten werden können, wobei dieser Abstand entsprechend der Menge des Mediums sehr klein sein kann, z.B. im Bereich von 10-20µm.

Ferner hat das viskose Medium den weiteren wesentlichen Vorteil, dass durch die adhäsive Wirkung, die verdrehsteife aber in axialer Richtung bewegliche statische Maßverkörperung oder Wandler zu der sich drehenden Maßverkörperung auf einem durch das viskose Medium bestimmten Abstand konstant gehalten werden kann. Der minimale Abstand kann dabei auch bestimmt werden durch die Führung, z.B. durch die Länge des Führungszapfens und der Tiefe der Führungsvertiefung.

Die Führungsnut weist vorteilhafterweise einen sich in Nuttiefenrichtung verjüngenden, insbesondere dreieckförmigen Querschnitt auf. Die Führungsnut bildet eine konzentrische Führung für den Führungszapfen.

Zur exakten Führung kann in Weiterbildung der Erfindung der Führungszapfen formschlüssig in wenigstens eine der Richtungen, die nicht die Messrichtung darstellt, geführt sein.

Erfindungsgemäß wird vorgeschlagen, dass die Maßverkörperungen so ausgebildet werden, dass diese sowohl zentrisch, als auch in bezug auf den Abstand formschlüssig zueinander geführt werden können. Dies kann dadurch realisiert werden, dass sich in der einen Maßverkörperung eine konisch verlaufende, konzentrische Senke befindet, und an der anderen Maßverkörperung ein in der Senke sitzender konischer Zapfen angeordnet ist.

In Weiterbildung der Erfindung ist die mindestens eine statische Maßverkörperung und/oder der mindest eine statische photoelektrische Wandler über eine Statorkupplung verdrehsteif gegenüber dem zu messenden Drehwinkel angeordnet, aber bleibt sowohl in axialer, als auch in radialer Richtung beweglich, wobei bevorzugt diese verdrehsteife Statorkupplung ein Parallelogramm darstellt.

In einer weiteren Anordnung mit feststehendem statischen Wandler ist die sich drehende Maßverkörperung vorteilhafterweise über eine winkeltreue Wellenkupplung ausgeführt.

Grundsätzlich ist das erfindungsgemäße Prinzip auch auf nicht optische Drehwinkelsensoren anwendbar.

Im Folgenden wird die Erfindung unter erläutert. In der Zeichnung zeigen:
- Fig. 1: eine schematische Ansicht zweier Maßverkörperungen teilweise weggeschnitten;
- Fig.2: einen Querschnitt der Maßverkörperungen aus Fig. 1 in Explosionsdarstellung;
- Fig. 3: schematische Draufsichten der ersten und zweiten Maßverkörperungen ;
- Fig. 4: einen Querschnitt der aufeinanderliegenden Maßverkörperungen aus Fig. 3.

Ein erfindungsgemäßer Drehwinkelsensor weist eine erste in Messrichtung bewegliche Maßverkörperung 1 und eine zweite Maßverkörperung 2, die statisch angeordnet ist, auf. Durch Messung der relativen Bewegung der Maßverkörperung 1 gegenüber der Maßverkörperung 2 lassen sich Drehwinkel bestimmen, wie dies seit langem bekannt ist.

Erfindungsgemäß liegen die Maßverkörperungen 1 und 2 mit einem gewissen Abstand übereinander, wobei sich eine Unterseite 3 der ersten Maßverkörperung 1 einer Oberseite 4 der zweiten Maßverkörperung 2 gegenüberliegen. Damit die Maßverkörperungen 1 und 2 in jeder Winkelstellung und unabhängig von einer Wellenlagerung exakt konzentrisch zueinander liegen ist erfindungsgemäß eine Führung zwischen den Maßverkörperungen 1 und 2 vorgesehen, wodurch die Maßverkörperungen 1 und 2 konzentrisch zueinander ausgerichtet gehalten werden.

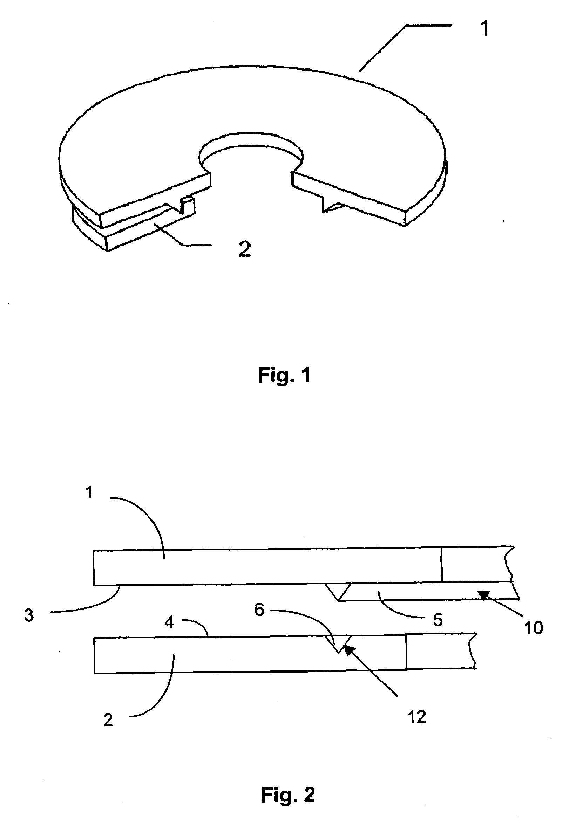

Die Führung besteht aus einem von der Unterseite 3 der ersten Maßverkörperung 1 abstehenden Führungselement 10 und einer auf der Oberseite 4 der zweiten Maßverkörperung 2 vorgesehenen Führungsvertiefung 12, in der das Führungselement 10 geführt ist. In einem Beispiel nach Fig. 1 und 2 ist das Führungselement 10 als Führungssteg 5 ausgebildet und die Führungsvertiefung 12 als Führungsnut 6, die sich im Querschnitt dreieckförmig verjüngt und konzentrisch verläuft. Das Führungselement 10 kann eine der Führungsvertiefung 12 angepasste Form aufweisen, wie das in Fig. 2 dargestellt ist. Dann besteht eine formschlüssige Verbindung zwischen den Maßverkörperungen 1 und 2 in wenigstens eine Richtung die nicht der Messrichtung entspricht. In dem dargestellten Ausführungsbeispiel liegt in radialer Richtung ein Formschluss vor. Durch den in der Führungsnut 6 verlaufenden Führungssteg 5 ist eine exakte Führung der Maßverkörperungen gegeneinander während der Drehungen bei kleinsten Abstände gegeben.

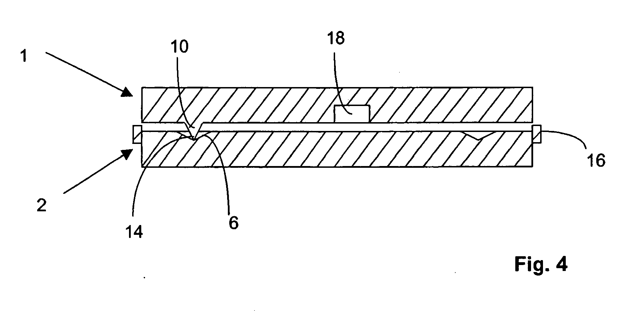

Es kann aber auch ausreichend sein, wenn lediglich eine Spitze 14 des Führungselements 10 ohne Spiel in eine Richtung, die nicht der Messrichtung entspricht, also in radialer Richtung, geführt gehalten ist. Dies ist anhand eines zweiten Ausführungsbeispiels in Fig. 4 dargestellt. In dem nicht dargestellten Ausführungsbeispiel der Erfindung ist das Führungselement nur ein einziger zentraler Führungszapfen, der spitz zulaufend ausgebildet ist. Dieser sitzt in einer zentralen rotationssymmetrischen Führungsvertiefung und zentriert somit die Maßverkörperungen. Dabei sitzt der zentrale Führungszapfen nur mit seiner Spitze auf dem Grund der bevorzugt ebenfalls spitz zulaufenden Führungsvertiefung auf. Damit ist nicht nur eine sehr exakte Justierung in radialer Richtung gegeben, sondern es werden darüber hinaus unvermeidbare Reibungsverluste minimiert. Das erlaubt problemlos Drehzahlen, die im Bereich von 10000/min und mehr liegen und die bei heutigen Drehgebern gefordert sind.

Damit die beiden Maßverkörperungen 1 und 2 nicht direkt aufeinanderliegen und sie sich gegeneinander verdrehen können, ist zwischen ihnen ein viskoses Medium vorgesehen, dass vorzugsweise optisch durchlässig ist, um die Maßverkörperungen 1 und 2 optisch abtasten zu können. Dieses Medium hat gleichzeitig eine adhäsive Wirkung, so dass insgesamt der Abstand zwischen den beiden Maßverkörperungen 1 und 2 mittels des Mediums auf einen bestimmten Abstand festgelegt ist. Dieser Abstand kann sehr klein (10-20*µ*m) sein und ist nach unten begrenzt durch die Höhe des Führungselement 10 und die Tiefe der Führungsvertiefung 12, wie dies z.B. in Fig. 4 deutlich erkennbar ist.

Damit das viskose Medium nicht verloren geht, kann eine Fluidsperre 16 beispielsweise am Rand einer der Maßverkörperungen vorgesehen sein. Da im Laufe der Zeit dennoch das Medium sich verflüchtigen kann, kann in einer oder beiden Maßverkörperungen eine Vorratsvertiefung 18 vorgesehen sein, die mit dem viskosen Medium gefüllt ist und aus der das viskose Medium in den Zwischenraum zwischen die beiden Maßverkörperungen 1 und 2 fließen kann. Diese Maßnahmen sind in der Zeichnung nur bzgl. Fig. 4 schematisch dargestellt und können aber selbstverständlich in allen anderen Ausführungsformen Anwendung finden.

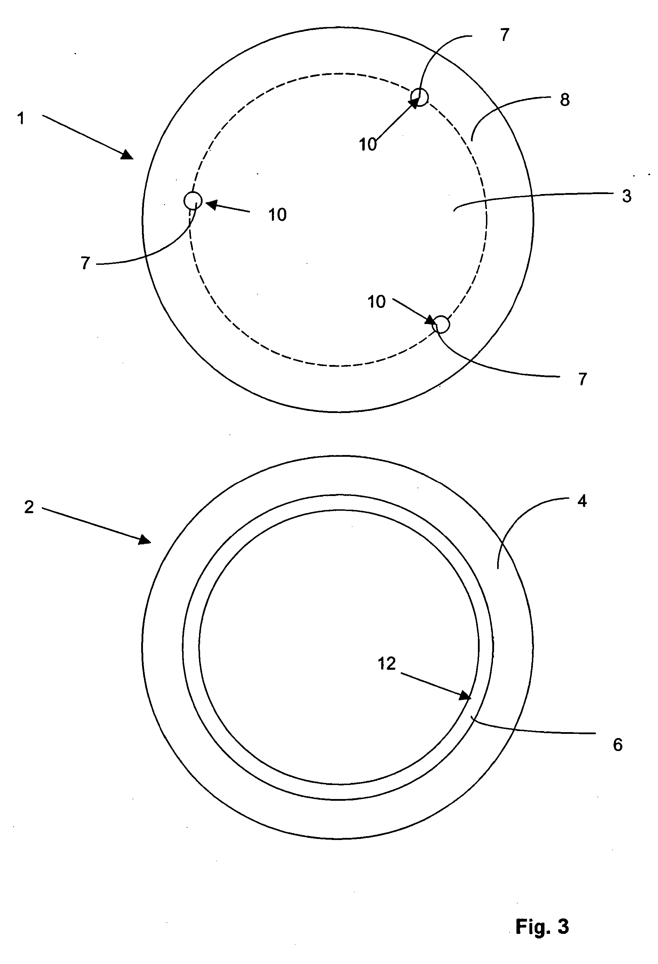

In dem weiteren in den Fig. 3 und 4 dargestellten Beispiel, in dem gleiche Teile mit gleichen Bezugsziffern versehen sind, bestehen die Führungselemente 10 aus drei Führungszapfen 7, die auf einem dem Nutradius entsprechenden Teilkreis 8 angeordnet sind. Die Führungszapfen 7 haben eine konische Form, so dass sie in die Führungsnut 6 eingreifen und in gleicher Weise wie der Steg 5 des ersten Ausführungsbeispiels eine Führung bewirken. Dabei können die Führungszapfen einen Formschluss in radialer Richtung aufweisen oder wie dargestellt, lediglich mit ihren Spitzen 14 auf dem Nutgrund geführt sein. Wiederum wird der Abstand zwischen den Maßverkörperungen über das viskose Medium bewirkt.

Die mindestens eine statische Maßverkörperung 1 oder 2 und/oder der mindestens eine statische photoelektrische Wandler sollten verdrehsteif gegenüber dem zu messenden Drehwinkel angeordnet sein, aber sowohl in axialer, als auch in radialer Richtung beweglich bleiben, damit Zentrierung und Abstandserhaltung ausschließlich durch die erfindungsgemäß vorgesehene Führung erfolgen kann und dementsprechend exakt ausrichten werden kann. Die verdrehsteife Anordnung stellt bevorzugt ein Parallelogramm dar und/oder die sich drehende Maßverkörperung sollte über eine winkeltreue Wellenkupplung geführt sein. Mit diesen Maßnahmen kann über die Führung eine optimale Ausrichtung der Maßverkörperungen in einem Drehwinkelsensor erreicht werden.

## Patentansprüche

1. Optischer Drehwinkelsensor mit mindestens einer in Messrichtung beweglichen Maßverkörperung (1) mit darauf befindlichen Licht durchlässigen und nicht durchlässigen Bereichen, mindestens einer in Messrichtung relativ statisch dazu angeordneten zweiten Maßverkörperung (2) und mindestens einem statischen photoelektrischen Wandler, wobei die Maßverkörperungen (1 und 2) durch eine zwischen den Maßverkörperungen (1 und 2) vorgesehene Führung in Messrichtung zueinander ausgerichtet sind,
**dadurch gekennzeichnet, dass** die Führung aus einem von einer der Maßverkörperungen (1) abstehenden und zentrisch angeordneten Führungszapfen (10) gebildet ist, der in einer an der anderen Maßverkörperung (2) eingebrachten zentralen Führungsvertiefung (12) geführt ist, so dass die Maßverkörperungen selbst die Führung übernehmen, und dass zwischen den Maßverkörperungen ein viskoses, lichtdurchlässiges Medium vorgesehen ist, durch das der Abstand der sich drehenden Maßverkörperungen (1, 2) konstant gehalten wird.

2. Drehwinkelsensor nach Anspruch 1, **dadurch gekennzeichnet, dass** die Führungsvertiefung (6) einen sich in Nuttiefenrichtung verjüngenden, insbesondere dreieckförmigen Querschnitt aufweist.

3. Drehwinkelsensor nach Anspruch 1 oder 2, **dadurch gekennzeichnet, dass** der Führungszapfen spitz zulaufend ausgebildet ist.

4. Drehwinkelsensor nach einem der vorhergehenden Ansprüche, **dadurch gekennzeichnet, dass** über die Führung die Maßverkörperungen (1 und 2) auf Abstand gehalten sind.

5. Drehwinkelsensor nach einem der vorhergehenden Ansprüche, **dadurch gekennzeichnet, dass** durch die Führung ein Formschluss in wenigstens eine der Richtungen, die nicht die Messrichtung darstellt, gegeben ist.

6. Drehwinkelsensor nach den vorangegangenen Ansprüchen, **dadurch gekennzeichnet, dass** die mindestens eine statische Maßverkörperung und der mindest eine statische photoelektrische Wandler verdrehsteif gegenüber dem zu messenden Drehwinkel angeordnet ist, aber sowohl in axialer, als auch in radialer Richtung beweglich bleibt.

7. Drehwinkelsensor nach Anspruch 6, **dadurch gekennzeichnet, dass** die verdrehsteife Anordnung ein Parallelogramm darstellt.

8. Drehwinkelsensor nach einem der vorhergehenden Ansprüche, **dadurch gekennzeichnet, dass** die sich drehende Maßverkörperung über eine winkeltreue Wellenkupplung geführt ist.

## Claims

1. Optical rotation angle sensor with at least one measuring standard (1) moveable in the measuring direction and having thereon light-permeable and non-permeable areas, with at least a second measuring standart (2) arranged relative statically in the measuring direction and at least one static photoelectric transducer, the measuring standards (1 and 2) are aligned realtive to each other by a guidance between the measuring standards (1 and 2) provided in measuring direction, **characterized in that** the guidance is formed by a centrally disposed guidance pin (10) extending from one of the measuring standards (1) and the guidance pin is guided in a central guiding recess (12) at the other measuring scales (2) so that the measuring standards guide themselves, and **in that** a viscous translucent medium is provided between the measuring standards by which the distance of the rotating measuring standards (1, 2) is held constant.

2. Rotation sensor according to claim 1, **characterized in that** the guide recess (6) has a triangular cross-section which is becomes smaller in a tapered notch depth direction.

3. Rotation sensor according to claim 1 or 2, **characterized in that** the guide pin is formed tapered.

4. Rotation sensor according to one of the preceding claims, **characterized in that** the guide helds the measuring standards (1 and 2) at a distance.

5. Rotation sensor according to one of the preceding claims, **characterized in that** the guide is given by a form fit in at least one of the directions that is not the direction of measurement.

6. Rotation angle sensor according to the previous claims, **characterized in that** the at least one static material measure and the at least one static photoelectric transducer is arranged torsionally stiff compared to the measured angle of rotation, but is movable axially as well as in the radial direction.

7. Rotation sensor according to claim 6, **characterized in that** the anti-rotation arrangement is a parallelogram.

8. Rotation angle sensor according to any preceding claim, **characterized in that** the rotating measuring standard is guided via an isogonal shaft coupling.

## Revendications

1. Capteur d'angle de rotation optique avec au moins une norme de mesure (1) se déplacent dans la direction de mesure et sur lequel se trouve les zones perméables à la lumière et non-perméables, avec au moins une seconde standart de mesure (2) disposée relative de façon statique dans la mesure direction et au moins un transducteur photoélectrique statique, le niveau de mesure (1 et 2) sont alignés realtive à l'autre par un guidage entre les normes de mesure (1 et 2) disposée dans la direction de mesure, **caractérisé en ce que** le guidage est formé par un central broche de guidage disposée (10) s'étendant à partir de l'une des normes de mesure (1) et la broche de guidage est guidée dans un évidement de guidage central (12) au niveau des autres norm de mesure (2) afin que les normes de mesure se guident, et **en ce qu'** un milieu translucide visqueux est prévu entre les normes de mesure par lequel la distance des normes de mesure de rotation (1, 2) est maintenu constant.

2. Capteur de rotation selon la revendication 1, **caractérisé en ce que** l'évidement de guidage (6) présente une section transversale triangulaire qui se rétrécit dans une direction de profondeur d'encoche conique.

3. Capteur de rotation selon la revendication 1 ou 2, **caractérisé en ce que** la broche de guidage est formée coniquement.

4. Capteur de rotation selon l'une quelconque des revendications précédentes, **caractérisé en ce que** le guide maintien les normes de mesure ( 1 et 2 ) à une certaine distance.

5. Capteur de rotation selon l'une quelconque des revendications précédentes, **caractérisé en ce que** le guide est formé par un ajustement de forme dans au moins l'une des directions qui n'est pas la direction de mesure.

6. Capteur d'angle de rotation selon l'une des revendications précédentes, **caractérisé en ce que** la au moins une mesure matérialisée statique et l'au moins un capteur photo-électrique statique est agencé de façon rigide en torsion par rapport à l'angle de rotation mesuré, mais peut se déplacer axialement ainsi que dans la direction radiale.

7. Capteur de rotation selon la revendication 6, **caractérisé en ce que** le dispositif anti-rotation est un parallélogramme.

8. Capteur d'angle de rotation selon l'une quelconque des revendications précédentes, **caractérisé en ce que** la norme de mesure de rotation est guidé par l'intermédiaire d'un accouplement d'arbre isogonal.
